# EUROPEAN PATENT APPLICATION

(11) **EP 2 420 968 A1**
(43) Date of publication of application: **22.02.2012**
(21) Application number: 09843333.7
(22) Date of filing: 16.04.2009
(51) Int. Cl.: G06Q 50/00

(54) **SERVICE SYSTEM**

(71) Applicant: Ripplex Inc., Tokyo 150-0001 (JP)
(72) Inventor: NAONO, Norihiko, Tokyo 150-0001 (JP); OHNAKA, Kunihiko, Tokyo 150-0001 (JP); OKAZAKI, Mitsutaka, Tokyo 150-0001 (JP); OTA, Tomohisa, Tokyo 150-0001 (JP)
(74) Representative: Ilgart, Jean-Christophe
(86) International application number: PCT/JP2009/057702
(87) International publication number: WO 2010/119552

(57) **Abstract**

Each of a plurality of service servers can: associate identification tags which identify users, with other-user identification tags which are identification tags for other users, and store said identification tags; and associate the identification tags with identification data that uniquely identify users in multiple service servers, and an encryption key generated for every identification data and store said identification tags. A control server device stores a table that stores the encryption data which are identifiers of the service servers that are used by users, said identifiers encrypted by encryption keys. The gateway server device receives an other-user identification tag which is associated with a first identification tag and stored in a first service server. If the other-user identification tag is associated and stored with identification data and the encryption key, the encryption data, which is associated with identification information related to the other-user identification tag and stored in the control server device, is decoded, the service server that can be used by users of the other-user identification tags is obtained; and is determined whether or not the first identification tag should be associated with the other-user identification tag.

## Description

### FIELD OF THE INVENTION

The present invention is related to data processing which provides online services linked to a server.

### DESCRIPTION OF THE RELATED ART

Various internet services are provided by many providers. The most widely used internet service is an electronic mail. An electronic mail is a service which provides a means of communication for acquaintances using an electronic mail address as an identification tag for uniquely identifying a user on the internet. In recent years, many services are appearing which provide means of communication between users in a web service using an identification tab for uniquely identifying a user within each web service. An SNS (Social Network Service), a chat, a blog. etc. are examples of these services (ref. Patent document 1).

An acquaintance list function is provided in a service which provides such a communication means for each user to manage acquaintances in the service. For example, an electronic mail client software, a web electronic mail, an SNS, a chat, a blog, etc. have functions for managing lists of acquaintances. Each user manages their acquaintances using an acquaintance list and widens their scope of communication by adding new other-users.

On the other hand, for a provider which provides internet services, the more the number of users within a service which they provide increases, or the closer personal relationships become, use of the service is accelerated and the value of the service increases seen form the viewpoint of the provider. Consequently, the service provider has a motive for expanding the personal relationships between users.

### PRIOR ART DOCUMENT

### PATENT DOCUMENT

Patent Document 1: Specification of United States Patent No. 7,069,308

### BRIEF SUMMARY OF THE INVENTION

### PROBLEMS TO BE SOLVED BY THE INVENTION

Based on this type of background, the following issues are apparent for users of each service on the internet and also providers who provide such services.

A problem for users is that it becomes cumbersome to manage acquaintances when the number of services used increases or when the number of acquaintances in each service increase. For example, supposing a user uses four services such as an electronic mail, an SNS, a chat and a blog, and has twenty acquaintances in each service. These acquaintances are separately managed by an acquaintance list corresponding to each service. Moreover, it is often the case that a user among the acquaintances uses a plurality of services among the four services, and includes a different identification tag for each service or uses a different name. In this situation it is difficult for the user to manage their acquaintances in a unified way.

On the other hand, each provider which provides an internet service wishes to increase the personal relationships between acquaintances within the services they provide, and also encourage users of other services to become users the services they provide. In order for this, by sharing with other internet service providers the identification tag, attribute data, acquaintance relationship etc held by each internet service provider, it is possible to increase users and expand the relationships between acquaintances. Therefore, a method for easily realizing interchangeability of an identification tag, attribute data and acquaintance relationship is required.

Various ideas are tried in order to solve the problems described above. Mutual exchange of identification tags, attribute data and acquaintance relationships, etc. between web services is targeted in each type of web service which includes an SNS by allowing external access to an API (Application Program Interface). In addition, attempts have been made to make logging in to a service including a different SNS using only one login data possible by a technology known as Open ID.

Relationships between acquaintances on a network are generally referred to as a Social Graph. Social graphs are included in data which is the object of mutual exchange between different web services including different SNSs. Recently, attempts have been made to exchange social graphs beyond boundaries of web services, whereas the social graphs until recently have been held independently within each web service. For example, a Social Graph API is known as one attempt. When a specific identification tag of a user in a web service is provided, a Social Graph API returns an identification tag of a user in another web service as a return value. In addition, when a specific identification tag of a user in a web service is provided, an identification tag of this user and a user who is an acquaintance in various web services is returned to each web service as a return value. Advancement of social graph exchange which exceeds web services is desired.

However, such types of attempts described above have not been widely adopted and the problems described above have not been solved. The reason for this is lies with the situation of the network service providers. While each provider wishes to use identification tags, attribute data and acquaintance relationships in other network services, at the same time, they do not want to provide identification tags, attribute data and acquaintance relationships used on their own networks to other service providers. Generally, while a user's data and relationship with acquaintances is a source of income to a network service provider, it is also a very important asset for keeping the user within its own service rather than another service. In other words, while each network service provider desires to create links with other network services, they also wish to maintain independence of their own network services. As a result, there are few network service providers who provide an API which externally publishes its own data of a user with the API described above, and although a standard specification such as OpenID or Social Graph API is proposed, the number of network services which accommodate these is not increasing.

this situation, a server, system, an information terminal, and a network related to the present invention maintains the independence of each network service and, at the same time, exchanges the acquaintance relationships held by each service. In this way, acquaintance relationships are easily expanded by a user and acquaintance management convenience is enhanced. In addition, while maintaining the independence of each network service, expansion of acquaintance relationships which is the source of the network service's value is realized.

### MEANS FOR SOLVING THE PROBLEMS

As one embodiment of the present invention, a service system is disclosed, the service system comprising: a plurality of service servers; a management server device; and a gateway server device capable of communicating with the plurality of service servers and the management server device; wherein each of the plurality of service servers is capable of associating and storing an identification tag which identifies a user within the service server with an identification tag of another user of the service server, and is further capable of associating and storing the identification tag with identification information that uniquely identify the user within the plurality of service servers and an encryption key generated for the identification information; the management server device stores a table that stores the identification information in a first column and encrypted information in a second column, the encrypted information being obtained by encrypting one or plurality of identifiers of service servers that the user identified by the identification information stored in the first column can use with the encryption key associated and stored with the identification information in one of the plurality of service server; the gateway server device including; a first reception part which receives a first other-user identification tag which is associated with a first identification tag and which is stored in a first service server which is one of the plurality of service servers, from the first service server; a first storage part which associates and stores the first other-user identification tag received by the first reception part with an identifier of the first service server, in a temporary table; a second reception part which receives a second other-user identification tag which is associated and stored with a second identification tag which identifies a user identified by the first identification tag within a second service server, from the second service server which is one of the plurality of service servers; a second storage part which stores the second other-user identification tag received by the second reception part with an identifier of the second service server, in the temporary table; an identification information sending part which sends the first identification information to the management server device if it is judged that the first other-user identification tag is associated and stored with the first identification tag and a first encryption key in the first service server; an encrypted data receiving part which receives from the management server device encrypted information which is obtained by encrypting information including an identifier of the first service server by the first encryption key, the encrypted information being received according to sending the first identification information by the identification data sending part; a first instruction part which instructs the first service server to send a first message to a user identified by the first other-user identification tag, if an identifier of the second service server is not included in a result of decrypting the received informaton data by the first encryption key.

As one embodiment of the present invention, a management server device is disclosed, the management server device being capable of communicating a plurality of service server, each of the plurality of service servers being capable of associating and storing an identification tag of a user which identifies uniquely the user within the service server with identification information that uniquely identify the user within the plurality of service servers and an encryption key generated for the identification information, comprising; a storage device which stores a table that stores the identification information in a first column and encrypted information in a second column, the encrypted information being obtained by encrypting one or plurality of identifiers of service servers that the user identified by the identification information stored in the first column can use with the encryption key associated and stored with the identification information in one of the plurality of service server.

As one embodiment of the present invention, a gateway server device is disclosed, the gateway server device comprising: a first reception part which receives a first other-user identification tag by communicating with a first service server, the first service server being one of a plurality of service servers, each of the plurality of service servers being capable of associating and storing an identification tag which identifies a user within the service server with an identification tag of an other user of the service server, and being further capable of associating and storing the identification tag with identification information that uniquely identify the user within the plurality of service servers and an encryption key generated for the identification information; a first storage part which associates and stores a first other user's identification tag received by the first reception part with an identifier of the first service server, in a temporary table; a second reception part which receives a second other user's identification tag which is associated and stored with a second identification tag which identifies a user identified by the first identification tag within a second service server, from the second service server which is one of the plurality of service servers; a second storage part which stores the second other user's identification tag received by the second reception part with an identifier of the second service server, in the temporary table; an identification information sending part which sends the first identification information associated and stored with the first other user's identification tag if it is judged that the first other user's identification tag received by the first reception part tag is associated and stored with the first identification tag and the first encryption key in the first service server; and an encrypted information receiving part which receives an encrypted information obtained by encrypting information including the identifier of the first service server from the first encryption key, according to sending the first identification information by the identification information sending part.

### ADVANTAGEOUS EFFECT OF THE INVENTION

According to the present invention, it is not necessary to provide identification tags, additional data and acquaintance relationships of a user stored in the server of each internet service to the server of another internet service even though mutual use of acquaintance relationships in a plurality of internet services is possible.

### BRIEF EXPLANATION OF THE DRAWINGS

Fig. 1 is an exemplary structural diagram of a control system in one embodiment of the present invention.
Fig. 2 is an exemplary structural diagram of an information terminal in one embodiment of the present invention.
Fig. 3 is an exemplary structural diagram of a service server in one embodiment of the present invention
Fig. 4 is an exemplary structural diagram of a gateway WEB server (gateway server device) in one embodiment of the present invention
Fig. 5 is an exemplary structural diagram of an encryption identification tag server (control server device) in one embodiment of the present invention
Fig. 6 is an example diagram of a table structure stored by a service server in one embodiment of the present invention.
Fig. 7 is an example diagram of a table which associates and stores identification tags, identification data and encryption keys in one embodiment of the present invention.
Fig. 8 is an example diagram of a table which associates and stores one identification tag with another identification tag in one embodiment of the present invention.
Fig. 9 is an example diagram of a table structure stored by a service server in one embodiment of the present invention.
Fig. 10 is an example diagram of a table which associates and stores identification tags, identification data and encryption keys in one embodiment of the present invention.
Fig. 11 is an example diagram of a table which associates and stores one identification tag with another identification tag in one embodiment of the present invention.
Fig. 12 is a flowchart for explaining a process whereby a user A associates an identification tag of an other-user with an identification tag in a web service server X in one embodiment of the present invention.
Fig. 13 is a diagram which shows a situation whereby a gateway server device stores a temporary table in one embodiment of the present invention.
Fig. 14 is an example diagram of a screen displayed on an information terminal according to screen data in one embodiment of the present invention.
Fig. 15 is an example diagram of a screen displayed on an information terminal according to screen data in one embodiment of the present invention.
Fig. 16 is an example diagram in which a gateway server device stores a temporary table in one embodiment of the present invention.
Fig. 17 is a flowchart for explaining a process wherein a control server device stores encryption data in one embodiment of the present invention.
Fig. 18 is an example diagram of a table which includes a first column and a second column stored by a storage device of a control server device in one embodiment of the present invention.
Fig. 19 is a flowchart for explaining a process whereby a user A associates an identification tag of an other-user with an identification tag in a web service server X in one embodiment of the present invention.
Fig. 20 is an example diagram of a screen displayed on an information terminal according to screen data in one embodiment of the present invention.
Fig. 21 is an example diagram of a screen displayed on an information terminal according to screen data in one embodiment of the present invention.
Fig. 22 is a flowchart for explaining a process for enquiring whether an identification tag of an other-user can be associated with an identification tag of a user A in one embodiment of the present invention.
Fig. 23 is an example diagram of a screen in which an enquiry is made as to whether an identification tag of an other-user can be associated with an identification tag of a user A in one embodiment of the present invention.
Fig. 24 is an example diagram of a screen which displays an identification tag associated with an identification tag of a user A in one embodiment of the present invention.
Fig. 25 is a flowchart for explaining a process whereby a user A associates an identification tag of an other-user with an identification tag in a web service server X in one embodiment of the present invention.
Fig. 26 is an example diagram of a screen which displays an identification tag associated with an identification tag of a user A in one embodiment of the present invention.

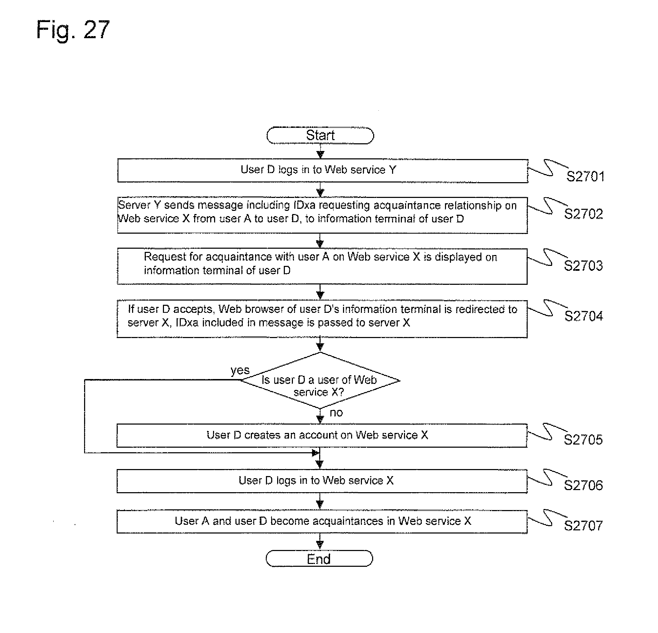

Fig. 27 is a flowchart for explaining a process whereby a user A associates an identification tag of an other-user with an identification tag in a web service server X in one embodiment of the present invention.
Fig. 28 is an example diagram of a screen in which an enquiry is made as to whether an identification tag of an other-user can be associated with an identification tag of a user A in one embodiment of the present invention.

### DETAILED DESCRIPTION OF THE INVENTION

The preferred embodiments for realizing the present invention are explained below. Because the scope of the present invention is clearly defined by the scope of the attached patent claims, the embodiments should not be interpreted in a limited manner but should be interpreted as merely aiming to exemplify the general principle of the invention.

### (First Embodiment)

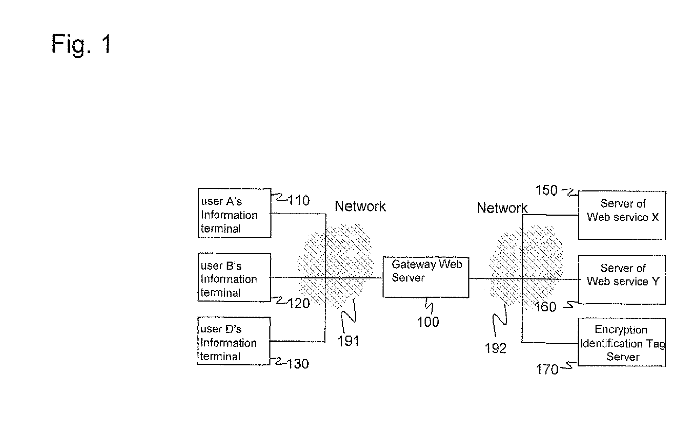

Fig. 1 shows an exemplary structure of data display and a control system, which is an example of an embodiment of the present invention. A gateway web server 100 is connected to a server 150 of a web service X and a server 160 of a web service Y, and an encryption identification tag server 170 via a network 192. In addition, the gateway web server 100 is connected to an information terminal 110 of user A, an information terminal 120 of user B and an information terminal130 of user D via a network 191. Networks 191 and 192 may be different or the same networks.

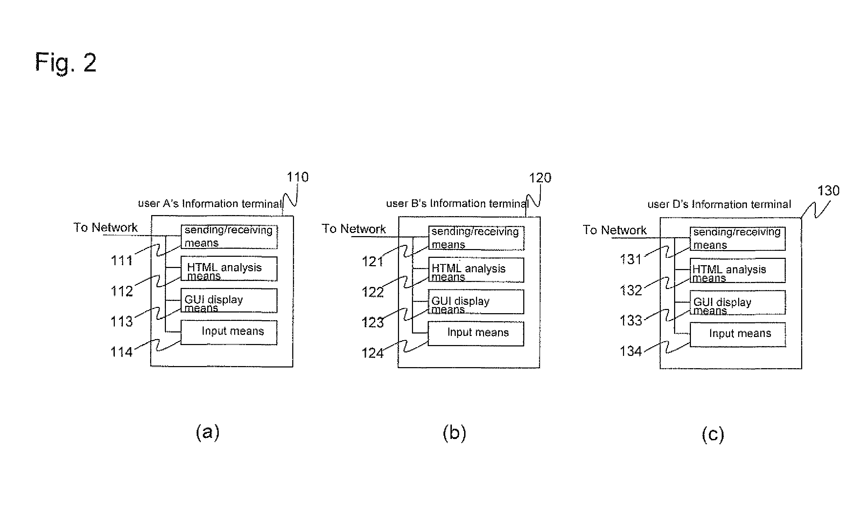

An exemplary structure of the information terminals of users A, B and D is shown in Fig. 2. The information terminal 110 of user A includes a sending and receiving means 111, an HTMLHyperText Markup Language) analysis means 112, a GUI (Graphical User Interface) display means 113, and an input means 114. The information terminal 120 of user B includes a sending and receiving means 121, HTML analysis means 122, a GUI display means 123, and an input means 124. The information terminal 130 of user D includes a sending and receiving means 131, a HTML analysis means 132, a GUI display means 133, and an input means 134.

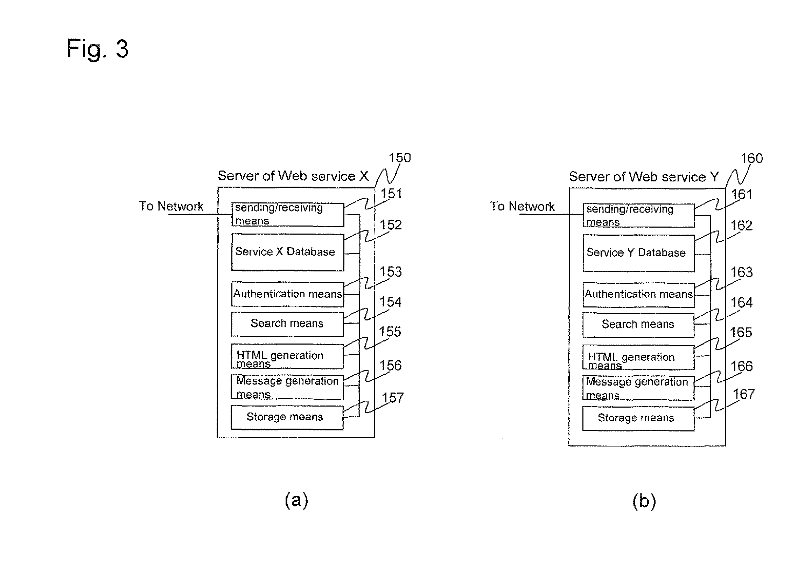

An exemplary structure of a server of web service X and a server of web service Y is shown in Fig. 3. The server 150 (referred to as server X below) of web service X includes a sending and receiving means 151, a database 152 of service X (referred to below as database X), a authentication means 153, a search means 154, an HTML generation means 155, a message generation means 156, and a storage means 157. The server 160 (referred to as server Y below) of web service Y includes a sending and receiving means 161, a database 162 (referred to below as database Y) of service Y, a authentication means 163, a search means 164, an HTML generation means 165, a message generation means 166, and a storage means 167.

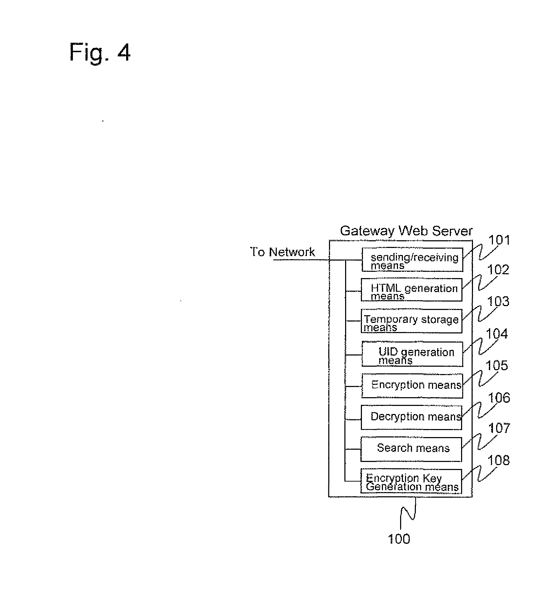

An exemplary structural diagram of a gateway web server is shown in Fig. 4. The gateway web server 100 includes a sending and receiving means 101, an HTML generation means 102, a temporary storage means 103, a UID generation means 104, an encryption means 105, a decryption means 106, a search means 107, and an encryption key generation means 108.

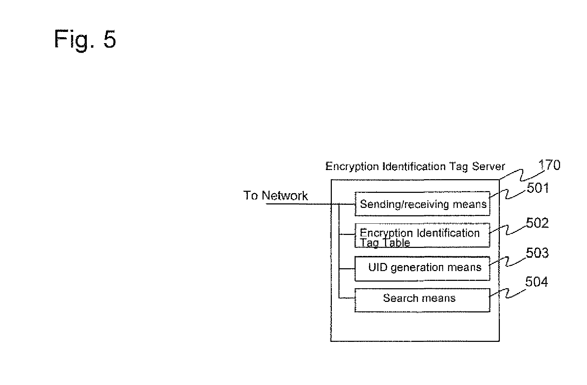

An exemplary structure of an encryption identification tag server is shown in Fig. 5. The encryption identification tag server 170 includes a sending and receiving means 501, an encryption identification tag table 502, a UID generation means 503, and a search means 504.

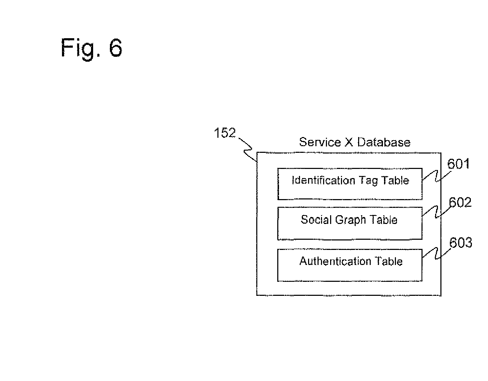

A table included in database X 152 is shown in Fig. 6. Database X 152 includes an identification tag table 601 and a social graph table 602, and an authentication table 603. An identification tag for uniquely identifying individual users of web service X, attribute data of each user, user unique identification tag (referred to as UID below), and an encryption key are associated with the identification tag 601 are stored. In addition, acquaintance relationships in web service X are stored in social graph table 602.

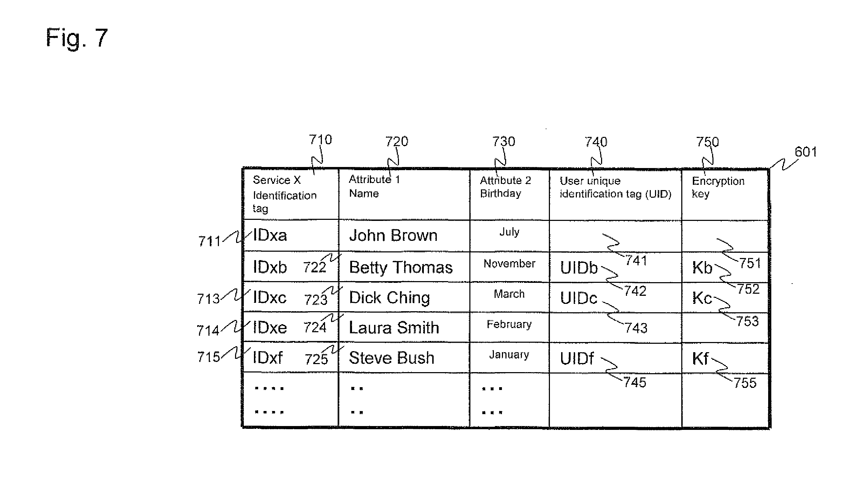

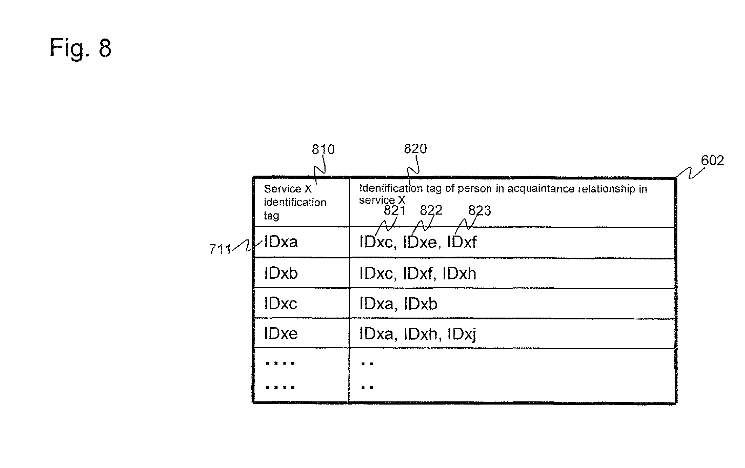

An example of the identification tag table 601 in the present embodiment is shown in Fig. 7. The identification tag table 601 includes an identification tag 710 for uniquely identifying each user in the web service X, the name 720 of each user as an attribute, and the birth month 730 of each user as an attribute, UID 740, and the encryption key 750. There may be a plurality of attributes or none at all. Attribute data may include any data as long as it can be associated with each user. In addition, an example of the social graph table 602 is shown in Fig. 8. The social graph table 602 includes two columns, an identification tag 810 for uniquely identifying each user in the web service X, and an identification tag 820 of a user in an acquaintance relationship with each user. Furthermore, the authentication table 603 is stored with authentication data such as a password which is associated with an identification tag of each user.

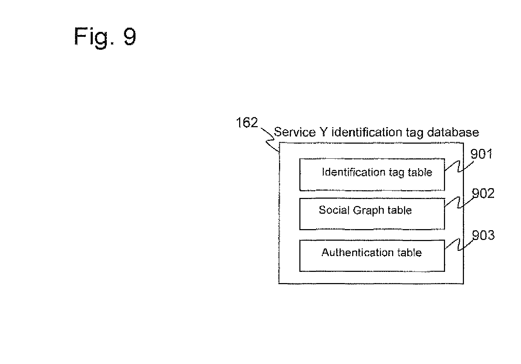

A table included in database Y 162 is shown in Fig. 9. Database Y 162 includes an identification tag table 901, a social graph table 902, and an authentication table 903. An identification tag for uniquely identifying each user of web service Y, attribute data of each user, a UID and an encryption key are associated with the identification tag table 901 and stored. In addition, acquaintance relationships within the web service Y are stored in the social graph table 902.

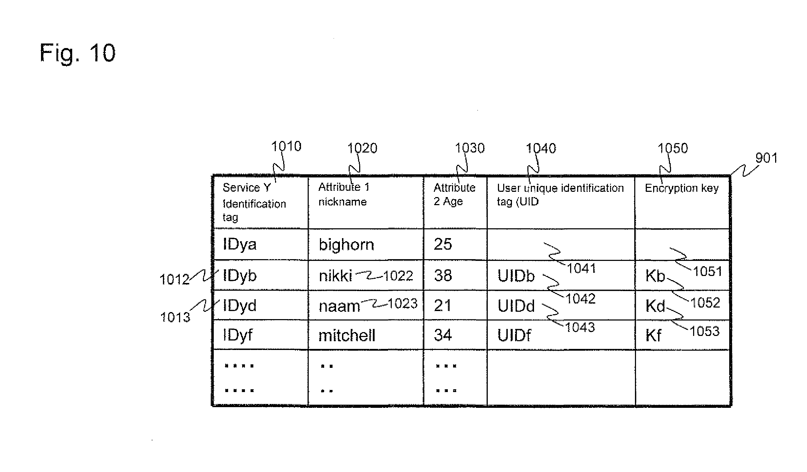

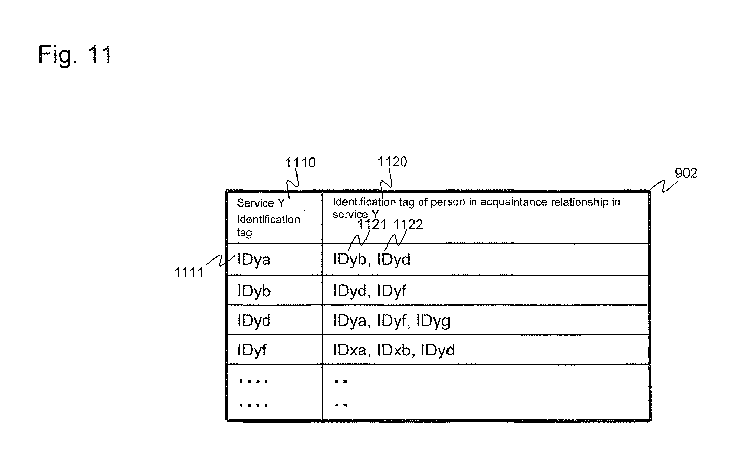

An example of the identification tag table 901 is shown in Fig. 10. The identification tag table 901 includes an identification tag 1010 for uniquely identifying each user in the web service Y, a nickname 1020 of each user as an attribute 1, an age 1030 of each user as an attribute 2, a UID 1040 and an encryption key 1050. Attribute data may include any data as long as it can be associated with each user. In addition, an example of the social graph table 902 is shown in Fig. 11. The social graph table 902 includes two columns, an identification tag 1110 for uniquely identifying each user in the web service X, and an identification tag 1120 of a user in an acquaintance relationship with each user. Furthermore, the authentication table 903 is stored with authentication data such as a password which is associated with an identification tag of each user.

Furthermore, identification tags are all denoted in a format of IDmn in the present specification. Here, m represents the name of the web service in which a user is uniquely identified by this identification tag, and n represents the user. For example, IDxa represents an identification tag of user A in the web service X. Similarly, IDya represents an identification tag of user A in the web service Y. In this case, user A is a user of both web service X and web service Y. Actually, an identification tag of web service X and web service Y are both independent, and although there is no method for the server of web service X or the web server of web service Y detecting the fact that a user A uses both web service X and web service Y, this type of denotation method is used in the present specification for clarifying the details of the present invention.

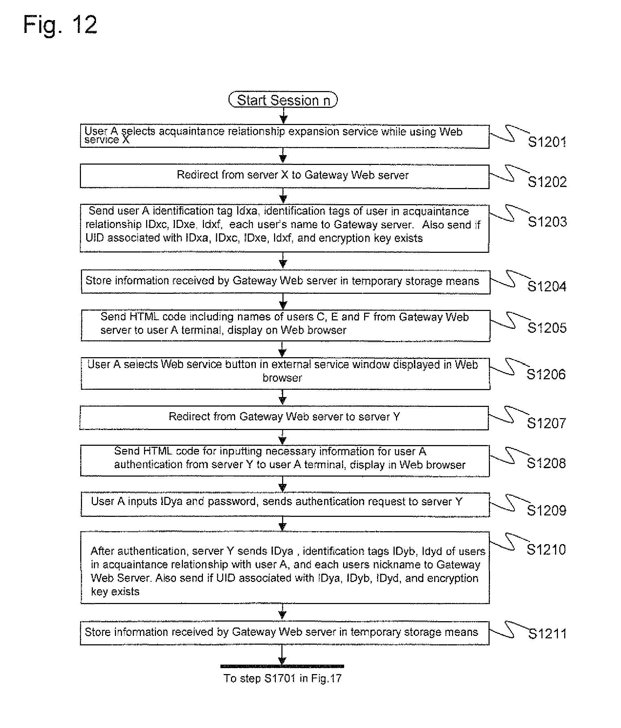

Next, a process whereby a user A increases acquaintances in the web service X using a server, an information terminal and a system of the present invention is explained using the flow diagram in Fig. 12.

Now, user A uses web service X via the information terminal 110. At this time, an HTML code which is generated by the HTML generation means 155 of the server in web service X, and sent to the information terminal of user A via the sending and receiving means 151 and network 192 and network 191, is analyzed by the HTML analysis means 112 and the result is displayed on the GUI display means 113. Prior to this, user A sends an identification tag IDxa and password in the web service from the information terminal 110 to the server of the web service X, and authentication means 153 authenticates access from the information term inal 110 of user A.

Next, user A selects an acquaintance relationship expansion service in the present invention included in the web service X (step S1201). This is performed by user A by selecting, for example, an acquaintance relationship expansion service button displayed on a screen of web service X. Here, an acquaintance relationship expansion service session n described below begins. The web service X as described above is provided by the server 150 of the web service X, however, the acquaintance relationship expansion service which is one part of the web service X is provided by the gateway web server 100. That is, wen user A selects the acquaintance relationship expansion service using an input/output means on user A's information terminal, a request is sent to the server 150 of the Web service X via the network 191 and 192, and the sending and receiving means 151 redirects the request to the gateway web service 150 (step S1202). Next, the search means 154 of web service X searches the social graph table 602 of the database X 152 for identification tag IDxa 711 of user A as a search key, and obtains IDxc 821, IDxe 822 and IDxf 823. This shows that user A has an acquaintance relationship with user C, E and F in the web service X. Furthermore, the search means 154 searches the identification tag table 601 of the database X152 with IDxc, IDxe and IDxf, and obtains the names of users C, E and F. The name of each user are Dick Ching 723, Laura Smith 724, and Steve Bush 725. Next, the sending and receiving means 151 of the server of the web service X sends the identification tag IDxa of user A, and the identification tags and names of users C, D and E, who are in an acquaintance relationship, to gateway web server 100. In addition, in the case where a user unique identification tag (hereinafter called "UID") of user A exists, this is associated with IDxa and also sent to the gateway web server (step S1203). It is not sent to the server if it does not exist. Referring to Fig. 7, because a UID which corresponds to IDxa is 741 which does not exist in the UID column 740 it is not sent. Furthermore, a UID and encryption key are associated with each identification tag and sent to the gateway web server for a user for which a UID and encryption key exists among the users C, E and F, who are in an acquaintance relationship. In the case where they don't exist they are not sent. Referring to Fig. 7, because each UID and encryption key exists for IDxc and IDxf among IDxc, IDxe and IDxf obtained in the search described above, UIDc743, Kc753, UIDf745, Kf755 are also sent to the gateway web server. Here, a UID is an identification tag for uniquely specifying each user across a plurality of servers. A UID is explained in detail below. In the present description of the invention, the notation UIDm indicates the UID of a user M.

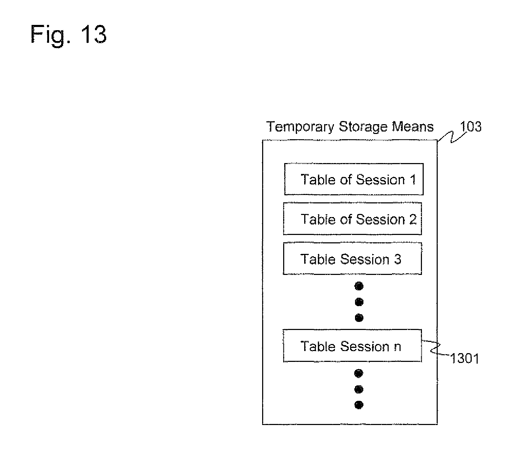

Next, the sending and receiving means 101 of the gateway web server receives this information and stores it in temporary storage means 103 (step S1204). The temporary storage means 103 is a means for temporarily storing data for each session of an acquaintance relationship expansion service and the data is deleted after each session is completed. Generally, while the main storage means of a computer comprised from DRAM (Dynamic Random Access Memory) is often used as a temporary storage means, the temporary storage means can be realized by any device as long as the contents are deleted after each session completed. An example of a temporary storage means is shown in Fig. 13.

A table is created for each session in the temporary storage means 103. The gateway web server can process a plurality of sessions in parallel. As a result, as is shown in Fig. 13, an arbitrary number of tables including zero exist at any arbitrary moment in the temporary storage means 103. Each session is stored in the temporary storage means 103 while a session is in operation but is deleted when the session is completed. Information which is received from the server of the web service X in step S1204 described above is stored in a table 1301 of session n in Fig. 13.

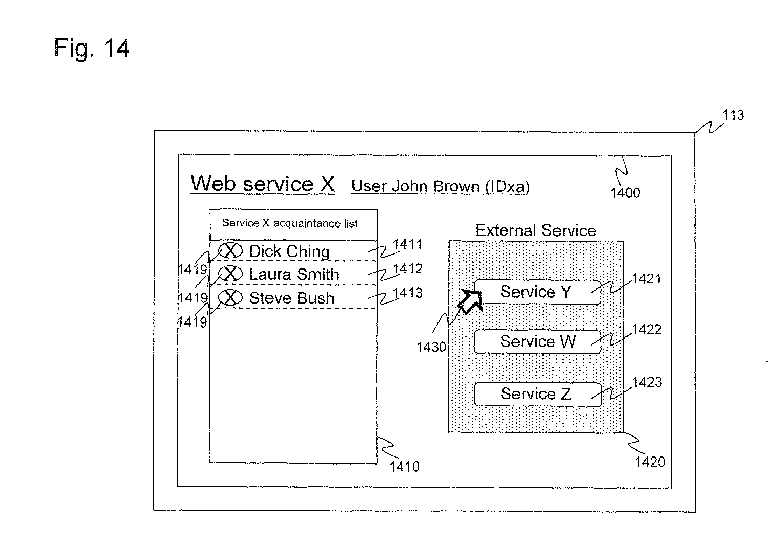

Next, the HTML generation means 102 of the gateway web server generates an HTML code which includes the names of users C, E and F, who are in an acquaintance relationship with user A in the web server X and which are stored in the temporary storage means 103 in step S1204 described above, and the sending and receiving means 101 sends the code to the information terminal of user A via the network 191. In the information terminal of user A, the sending and receiving means 111 receives the code and after the code is analyzed by the HTML analysis means 112, the image shown in Fig. 14 is displayed on the GUI display means 113 (step S1205). In Fig. 14 a web browser window 1400 is displayed on the GUI display device 113. The acquaintance relationship expansion service within the web service X is displayed in this web browser window 1400. The acquaintance relationship expansion service is one part of the web service X. The image displayed in the web browser window 1400 includes two windows, an acquaintance list 1410 of web service X and an external service list 1420.

First, the acquaintance list 1410 of web service X is explained. A list of the names of users C, E and F, who are in an acquaintance relationship with user A, is displayed in the acquaintance list 1410 of web service X. In Fig. 14, Dick Ching 1411, Laura Smith 1412 and Steve Bush 1413 are the names of each user C, E and F in the web service X. In addition, the mark 1419 displayed to the left of the names illustrates that these names are aquaintances in the web service X.

The external service list window 1420 displayed in the web browser 1400 is explained while referring to Fig. 14 again. An external service is a web service other than the web service which user A uses. In the example shown in Fig. 14, the external service list window 1420 includes three buttons: a button 1421 for user A to import an acquaintance list of a web service Y into the web service X, a button 1422 for user A to import an acquaintance list of a web service W into the web service X, and a button 1423 for user A to import an acquaintance list of a web service Z into the web service X. As is clear from Fig. 7 and Fig. 10, user A is also a user of a user of web service Y as well as a user of web service X.

User A moves a cursor 1430 displayed on the GUI display means 113 via the input/output means 114 of user A's information terminal, aligns the cursor with the button 1421 for linking with the web service Y and selects web service Y by pressing a button included in the input/output means 114 (step S1206). Then, the sending and receiving means 111 of user A's information terminal sends an identification request of user A in the web service Y to the gateway web server 100 via the network 119. Furthermore, the sending and receiving means 101 of the gateway web server forwards the request after receiving it and sends it to the server 160 of the web service Y via the network 192. Here, the screen of the web browser 1400 in the information terminal of user A is redirected to the server of the web service Y from the gateway web server 100 (step S1207). When the sending and receiving means 161 of the web service Y receives the identification request described above, the HTML generation means 165 generates an HTML code of an input screen for authenticating that the information terminal 110 of user A belongs to user A who holds the identification tag IDya. The sending and receiving means 161 sends the HTML code to the information terminal 110 of user A via the network 192 and the network 191. This HTML code is sent to the HTML analysis means via the sending and receiving means 111 of user A, is analyzed and then displayed by the GUI display means 113 (step S1208).

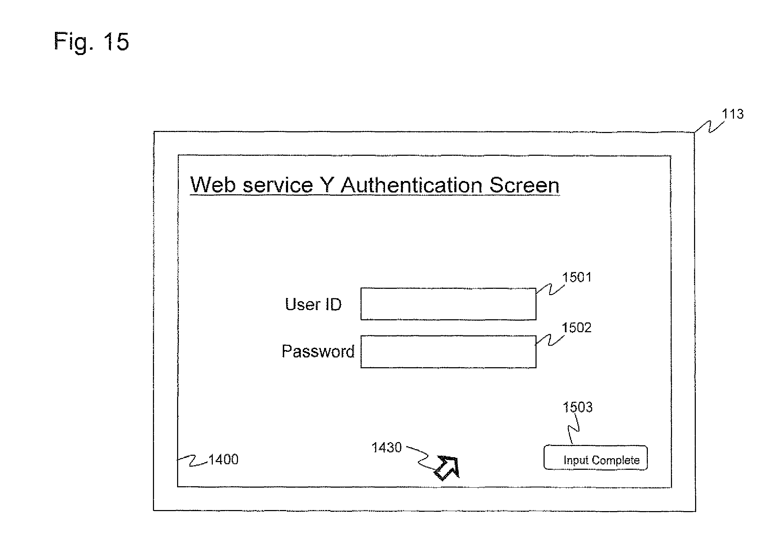

Fig. 15 is an example of a screen displayed by the GUI display means on the information terminal of user A at this time. The authentication screen of the web service Y displayed on the web browser 1400 includes an identification tag input column 1501, a password input column 1502 and an input completion button 1503. After user A inputs the identification tag IDya of user A in the web service Y into the ID input column 1501 and a password into the password input column 1502, user A moves the cursor 1430 to the position of the input completion button 1503 and makes a selection by pressing a button of input means 114.

Here, the identification tag and password of user A which is input are sent to the server 160 of web service Y via the sending and receiving means 111, the network 191 and the network 192 together with an authentication request (step S1209). When the sending and receiving means 161 receives these, it sends them to the authentication means 163. The authentication means 163 searches the authentication table 903 in the database Y 162 for the received identification tag IDya, which is input, as a search key and, after obtaining password information associated with IDya, detects whether it matches the password received in step S1209. The example shown here is explained using authentication via an identification tag and a password. However, any method is sufficient as long as it can confirm that the authentication request in step S1209 is performed by user A themselves or the request comes from the term inal 110 of user A.

If a match of the password described above is detected, a social graph 902 of the database Y 162 is search next using the authenticated identification tag IDya of user A as a search key. Referring to Fig. 11, IDya 1111 is searched. Next, the identification table 901 is searched for identification tags IDyb 1121 and IDyd 1122 associated with IDya 1111 as search keys. Referring to Fig. 10, the identification tags IDyb 1012 and IDyd 1013 are searched. Next, the sending and receiving means 161 sends the identification tag IDya to the gateway web server 100 via the network 192. In addition, at the same time, nicknames, nikki 1022 and naam 1023, which are associated with the identification tags IDyb and IDyd in the identification tag table 901 described above are sent to the gateway web server 100 while still associated with each identification tag. Similarly, as in step S1203, if a UID associated with IDya exists in the identification tag table 901, this UID is associated with IDya and sent to the gateway web server 100 (step S1210). In the present example shown here, there is not UID 1001 corresponding to IDya and it it not sent. In addition, referring to Fig. 10, among the search results described above, UID1042 which is the UID associated with the identification tag IDyb 1012 and encryption key Kb1052, and UID1043 which is associated with the identification tag IDyd and encryption key Kd1053 are sent to the gateway web server 100.

Next, the sending and receiving means 101 of the gateway web server receives this information and stores it in a table of session n in the temporary storage means 103 (step S1211). As already explained, the temporary storage means 103 is a means for temporary storage for each session of an acquaintance relationship expansion service and when each session is completed the information is deleted.

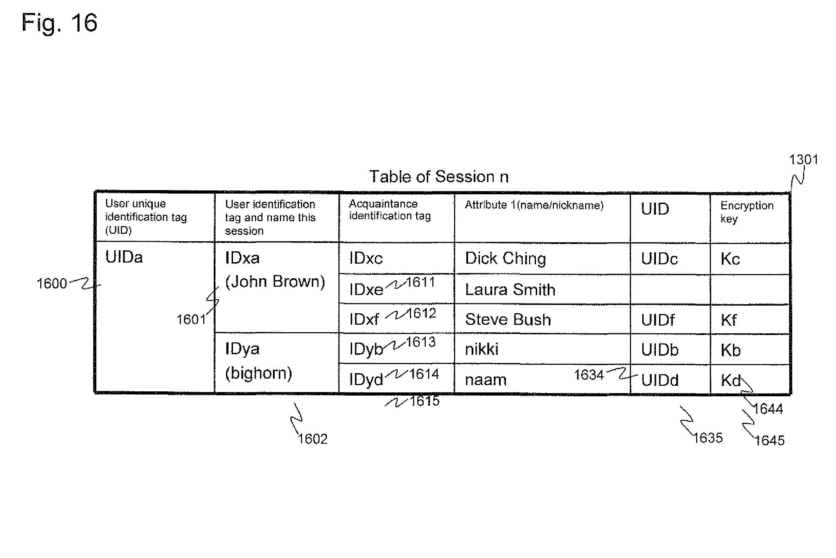

The table 1301 of this session n in the temporary storage means 102 of the gateway web server at the stage where step S1211 is completed is shown in Fig. 16. However, in the example shown in the present embodiment, because the UID of user A is not stored in the table 1301 of session n at steps S1204 and S1211, the UIDa1600 shown in Fig. 16 is left blank at the point and at step S1703 below, the state becomes as shown in Fig. 16. Here, acquaintance identification tags IDxc 1611, IDxe 1612, IDxf 1613 which are associated with IDxa 1601 and stored, and the name, UID and encryption key associated with each of these identification tags are the information received by the server of the web service X. In addition, acquaintance identification tags IDyb 1614, IDyd 1615 which are associated with IDya 1602 and stored, and the nickname, UID and encryption key associated with each of these identification tags are the information received by the server of the web service X in step S1211.

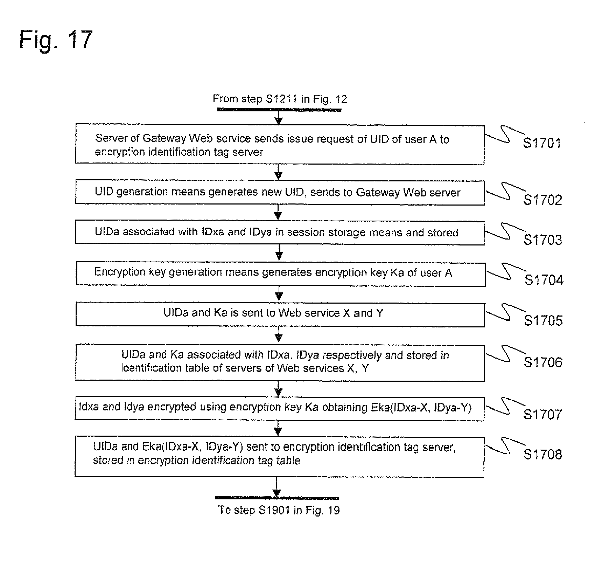

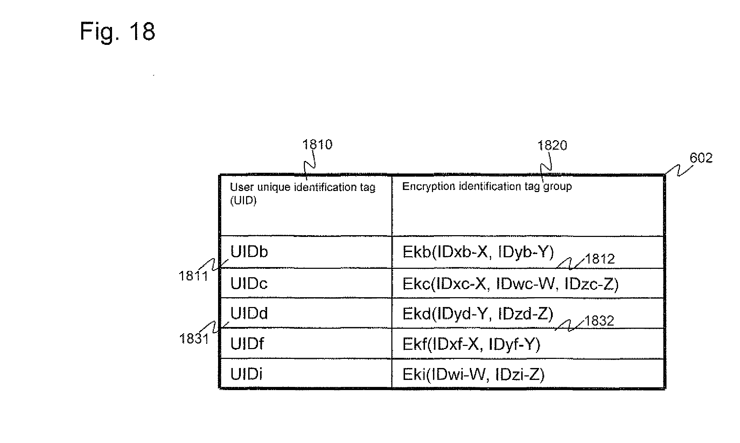

Next, a process of storing the fact that the identification tag IDxa in web service X and the identification tag IDya are both held by the user A in an encryption identification tag server 170 using the method of the present invention is explained with reference to the flow chart in Fig. 17. As described above, because the UID of user A is not received in steps S1204 and S1211, first, user A sends an issue request of a UID corresponding to identification tags IDxa 1601 and IDya 1602 to the encryption identification tag server 170 (step S1701) via the network 192. When the sending and receiving means of 501 of the encryption identification tag server receives this request, the UID generation means 503 searches the encryption identification tag table 502 and generates a new UID which hasn't previously existed. Next, the sending and receiving means 601 sends this new UID as the UID of the user A to the gateway web server 100 via the network 192 (step S1702). An example of the encryption identification table 502 is shown in Fig. 18. The encryption identification table 502 includes two columns, a UID column 1810 and an encryption identification tag group column 1820. In this example, the UID generation means 503 generates UIDa as a new UID. In the step S1702 described above, the UID generation means 503 generates a UID which is not in the UID column 1810. The encryption identification tag group column 1810 is explained below.

The sending and receiving means 101 of the gateway web server receives new UIDa, and UIDa is stored in the empty UID column 1600 in the table 1301 of the session n of the temporary storage means 103 (step S1703). Next, the encryption key generation means 108 of the gateway web server generates an encryption key for the UIDa, that is, an encryption key Ka for user A (step S1704). Next, the sending and receiving means 101 sends UIDa and Ka to the server 150 of the web service X and the server 160 of the web service Y via the network 192 (step S1705). Sending and receiving means 151 receives UIDa and Ka in the server of the web service X, and stores them in the identification tag table in database X (step S1706). Referring to Fig. 7, UIDa is stored in column 741 and Ka is stored in column 751. Similarly, sending and receiving means 161 receives UIDa and Ka in the server of web service Y, and stores them in the identification tag table 901 in database X. Referring to Fig. 10, UIDa is stored in column 1041 and Ka is stored in column 1051.

Next, the encryption means 105 encrypts with the encryption key Ka generated in step S1704 described above in the state where IDxa 1601 stored in the table 1301 of the session n of the temporary storage means and X which illustrates that this is an identification tag of web service X are associated and IDya 1602 and Y which illustrates that this is an identification tag of web service Y are associated (step S1707). Here, encrypted information is denotated as Eka (IDxa - X, IDya - Y). Next, sending and receiving means 101 sends UIDa and Eka (IDxa-X, IDya-Y) to the encryption identification tag table 170 via the network 192. The sending and receiving means 501 of the encryption identification tag server receives it, adds it to a new row in the encryption identification tag table 502 and associates UIDa 1811 and Eka (IDxa - X, IDya - Y) 1812 and stores them (step S 1708).

In the example of the present embodiment, UIDb of user B and encryption key Kb are stored in the identification tag table 901 of the server of web service X and the identification tag table 901 of the server of web service Y, from before session n begins. This is a result of user B using an acquaintance relationship expansion service in the web service X or web service Y which is used before session n begins, the same processes up to step S1706 and a process equivalent to Fig. 17 are performed. The process in Fig. 17 explained here is used not executed in session n but in sessions subsequent to session n, and is used when user A or another user uses an acquaintance relationship expansion service using a gateway web service.

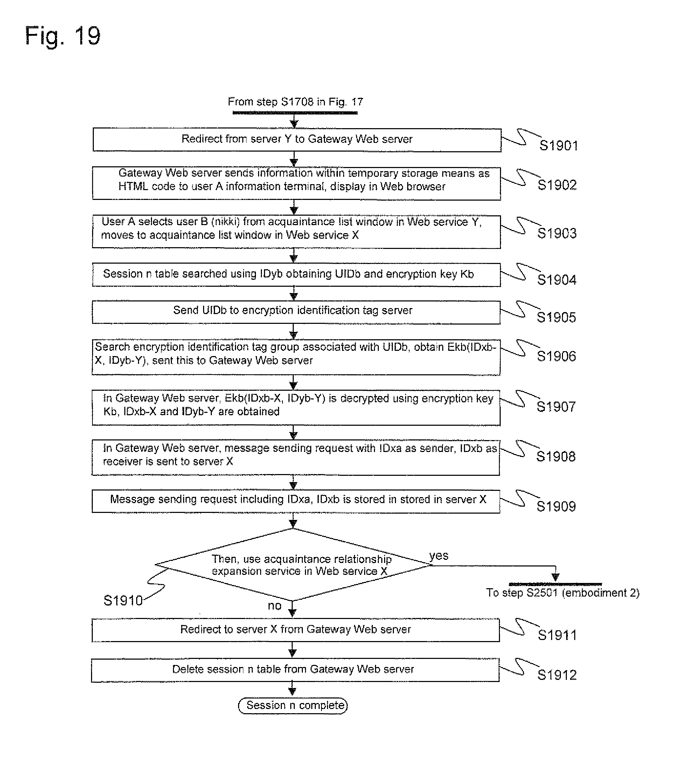

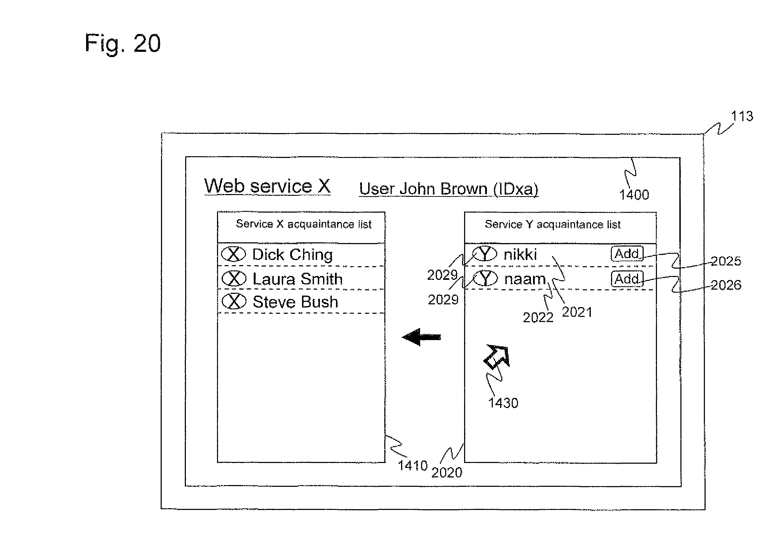

Next, processes in the acquaintance relationship expansion service of web service X used by user A which uses the gateway web service 100 is explained with reference to the flowchart in Fig. 19. The screen of the web browser of user As information terminal is redirected to the server 100 of the gateway web service from the server 160 of the web service Y (step S1901). Next, the HTML generation means 102 generates a HTML code which generates the screen in Fig. 20 from the table 1301 of the session n in the stated shown in Fig. 16, and sending and receiving means 101 receives it and sends it to the information terminal 110 of user A via the network 192. Sending and receiving means 111 in the information terminal of user A receives it and displays it in the web browser 1400 of the GUI display means after analysis by the HTML analysis means 112 (step S1902).

The image displayed in the GUI display means 113 of user A's information terminal is shown in Fig. 20. An acquaintance list window 2020 of web service Y is displayed in the web browser 1400 together with the acquaintance list window 1410 of service X already explained in Fig. 14. Nikki 2021 and naam 2022 are displayed in the acquaintance list window of web service Y These show that information in the table of session n in the temporary storage means of the gateway web server 100 is received as an HTML code and displayed. In Fig. 20, the mark 2029 shows that a displayed user is a user of the web service Y As is clear from Fig. 16, nikki 2021 is a nickname of user B who holds the identification tag IDyb of web service Y and naam 2022 is a nickname of user D who holds the identification tag IDyd of web service Y.

Next, user A moves the cursor 1430 displayed in GUI display means 113 by operating the input means 114, aligns the cursor with the Add button 2025, presses the button included in the input means 114, and by selecting the Add button 2025, the following two processes are performed. At this time, instead of pressing the Add button 2025, the user aligns the cursor 1430 with the displayed object 2021 shown as nikki in web browser 1400, and while selecting by pressing the button included in the input means moves the cursor 1430 within the acquaintance list window 1410 of web service X, releases the selection, and the following two processes are also performed even if an operation of so called drag and drop is performed (step S1903). This operation is where user A requests an acquaintance relationship with user B, who until this point existed in an acquaintance relationship only in the web service Y, also in the web service X. In embodiment one, user B is a user of web service X and already holds the identification tag IDxb. However, user A does not know this.

The following two processes are performed. The first process is for a change in display in the GUI display means 113 of user As information terminal. The second process is for requesting acceptance from user B of becoming an acquaintance of user A also in web service X.

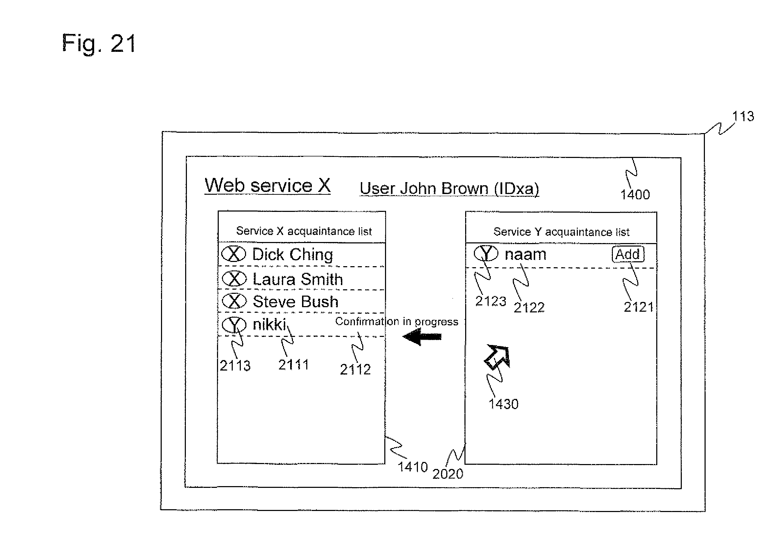

First, the first process is explained. Information that the Add button 2025 has been pressed and that a drag and drop has been performed is sent to the gateway web server 100 via the network 192 by the sending and receiving means 111. When sending and receiving means 101 receives this information, HTML generation means 102 generates a new HTML code for displaying a screen as shown in Fig. 21. This new HTML code is sent to the information terminal of user A via the sending and receiving means 101 via the network 191. When the sending and receiving means 111 receives this, the image shown in Fig. 21 is displayed on the web browser 1400 of the GUI display means 113 after analysis by the HTML analysis means 112.

In the screen shown in Fig. 21, an object 2111 which shows that user B, who has the nickname nikki in web service Y, is in an acquaintance relationship in web service Y with user A is newly added to the acquaintance list window 1410 of web service X (step S1903). The characters "confirmation in progress" 2112 is displayed in the object 2111 which represents user B. This does not have to be the characters "confirmation in progress" but can be any display which means a state prior to accepting an acquaintance relationship of user B with user A also in the web service X. Furthermore, in the example shown in Fig. 21, the object 2111 which represents user B is added to the acquaintance list window 1410 in the service X as a result of the operation in step S1903. However, for example, the object may be added to a separate window such as " aperson you are attempting to add to acquaintances in service X" displayed in web browser 1400. In addition, in the example shown in Fig. 21, as a result of the operation in step S1903, the object 2021 which represents user B shown in Fig. 20 is deleted from the acquaintance list window 2020 of web service Y in Fig. 21. However, the object does not have to be deleted.

Next, the second process is explained. Information that the Add button has been pressed and that adrag and drop has been performed in step S1903 is sent to the gateway web server 100 via the network 192 by the sending and receiving means 111. When sending and receiving means 101 of the gateway web server receives this information, the search means 107 searches for the UID and encryption key of user B who has the identification tag IDyb 1614, referring to Fig. 16, selected in step S1903 from the table 1301 of session n in the temporary storage means, and as a result obtains the UIDb1634 and Kb1644 (step S1904). Next, the sending and receiving means 101 sends a request for an encryption identification tag group associated with the UIDb to the encryption identification tag server 170 via the network 192 (step S 1905).

In the encryption identification tag server, the sending and receiving means 501 receives this request and search means 504 searches the encryption identification table for the received UIDb as a search key. By referring to Fig. 18, the UIDb1811 is detected. Then, the sending and receiving means 501 sends the encryption identification tag group Ekb (IDxb - X, IDyb - Y), which is associated with UIDb1811, to the gateway web server via the network 192 (step S1906). When the sending and receiving means 101 of the gateway web server receives this, a decryption means 106 decrypts the received Ekb (IDxb - X, IDyb - Y) using the encryption key Kb obtained in step S1904. As a result, two identification tags IDxb and IDyb held by user B are obtained (step S1907). With this process, the gateway web server 100 can obtain the fact that user B who holds IDyb in web service Y and holds the identification tag IDxb in web service X.

Next, the sending and receiving means 101 sends a message sending request which includes IDxb obtained in step S1907by the gateway web server 100 and IDxa1601 which is in the table 1301 of session n, to the web service Y via the network 192 (step S1908). Here, the message which is requested is for user A to request an acquaintance relationship in the web service X with user B. Next, the sending and receiving means 151 of web service X receives the message request and stores it in storage means 157 (step S1909).

Here, if user A terminates an acquaintance relationship expansion service of web service X (step S 1910), the access from the web browser of user A is redirected to the server 150 of web service X (step S1911), the table 1301 of the session n which is in the temporary storage means 103 of the gateway web server is deleted (step S1912) and the session n is terminated.

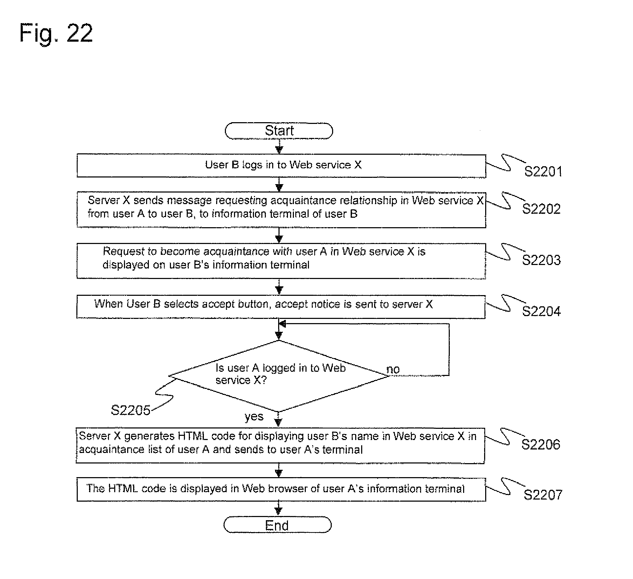

Next, a process of the server of web service X following receipt of the message request from user A to user B is explained with reference to the flowchart in Fig. 22.

User B logs in to web service X (step S2201). Next, the message generation means 156 of the server in web service X generates a message for requesting an acquaintance relationship on web service X with user A as the sender and user B as the receiver. As the sender and receiver, which is generated at this time, the identification tags IDxa and IDxb, which are stored in step 1909, are used. The message generated here is converted to an HTML code by the HTML generation means 155. The sending and receiving means 151 sends this HTML code to the information terminal 120 of user B via the the networks 192 and 191 (step S2202).

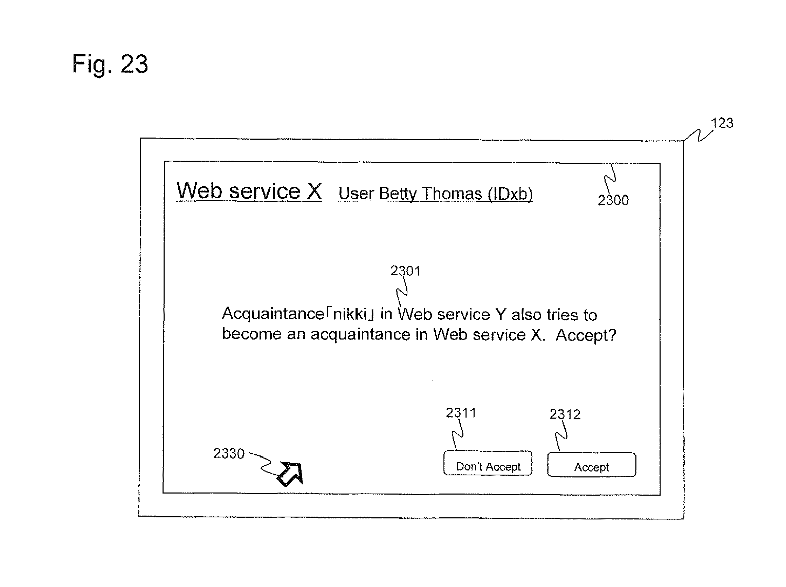

Next, when the sending and receiving means 121 in the information terminal of user B receives the HTML code, the image shown in Fig. 23 is displayed on the GUI display means 123 after an analysis by the HTML analysis means 122. web browser window 2300 is displayed in the GUI display means 123. Text 2301 which expresses the intention that user A, who is in an acquaintance relationship with user B in web service Y, wishes to be an acquaintance also in web service X, is displayed within the web browser window 2300 (step S2203). In addition, an acceptance button 2311 and an refusal button 2312 are displayed on this screen. Here, user B moves the cursor displayed on the display means 123 using the input means 124, aligns the cursor with the acceptance button 2312 and selects it by pressing an button included in the input means and so on. Information that this operation has been performed is sent to the server 150 of the web service X via the networks 191 and 192 by the sending and receiving means 121 (step S2204).

When the sending and receiving means 151 of the server of the web service X receives the information, an acceptance notification is stored in the storage means 157. At this point, if user A is logging in to web service X, the process proceeds to the next step S2206. If user A is not logging into web service X, the process proceeds to step S2206 when user A next logs in.

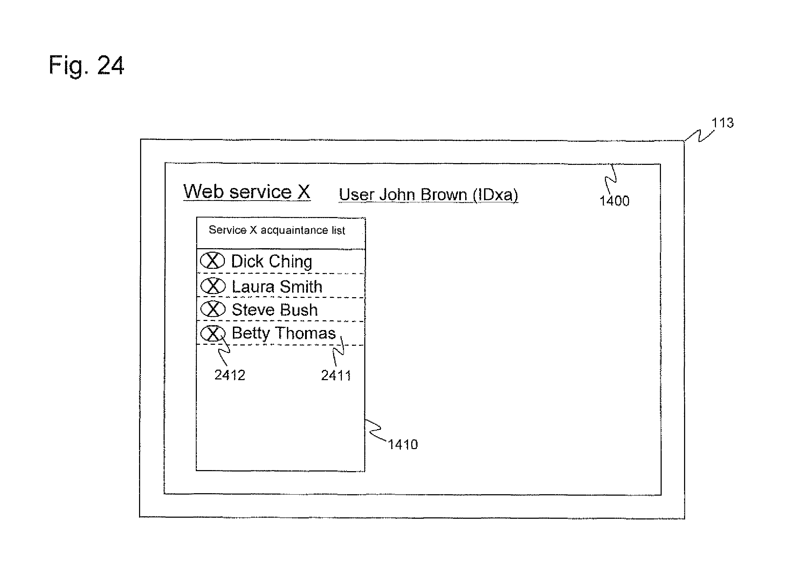

The HTML generation means 155 of the server of the web service X generates an HTML code of the image shown in Fig. 24. Next, the sending and receiving means 151 sends the HTML code to the information terminal 110 of user A via the network 191 (step S2206). Sending and receiving means 111 in the information terminal of user A receives the HTML code and the image shown in Fig. 24 is displayed on the GUI display means 113 after an analysis by the HTML analysis means 112 (step S2207).

As is shown in Fig. 24, web browser window 1400 is displayed in the display means 113. An HTML code analysis result is displayed in the web browser window 1400. As is clear from Fig. 7 and Fig. 10, user B uses the name Betty Thomas 722 in the web service X and the nickname nikki 1022 in the web service Y As a result of the processes from step S1201 to step S2204 explained up to this point, the name Betty Thomas 2411 of user B in the web service X and an icon 2412 which represents the fact that this is a name in web service X are both displayed in Fig. 24. After user A performs step S1903 which is an operation for making user B an acquaintance in web service X, the image shown in Fig. 21 is displayed on the GUI display means 113 of the information terminal of user A. When Fig. 21 and Fig. 24 are compared, while user B's nickname nikki2111 in web service Y is displayed along with the display "confirmation in progress" 2122 in Fig. 21, user B's name Betty Thomas2411 in the web service X is displayed as an acquaintance list in the web service X in Fig. 24. At this point, user A and user B can use the functions of web service X between them the same as other acquaintances displayed in the acquaintance list 1410.

Furthermore, in the encryption in the present embodiment, one symmetric secret key is used for each user, a non-symmetric key may also be used. In addition, in the present embodiment, while different key is used for each user, a common encryption key is used for each web service. However, a different encryption key may be used for each use and each web service. In addition, in the present embodiment after user A receives the authentication from the server of web service Y, the gateway web server generates the UID of user A in step S1702. However, user As UID may be generated at the point where it is know that a UID does not exist after step S1203 in which user A obtains an identification tag, identification tag of an acquaintance and attached information form the server of web service X. Also, in the present embodiment, a common web server was used for web service X and web service Y. However, different gateway web server may be used for each web service.

### (Second Embodiment)

In the first embodiment explained above, user B is a user of web service Y and also a user of web server X from before session n begins. That is, both IDxb and IDyb exist in the identification tag table 601 in the server of web service X shown in Fig. 7 and the identification tag table 901 in the server of web service Y shown in Fig. 10 from before session n begins. In the second embodiment, the case is explained that while user A and user B are in an acquaintance relationship in the web service Y and user A is a user of web service X at the point where session n begins, user D is not a user of web service X. In this case, a message cannot be sent from user A to user D in the web service X as is performed in step S1908 of web service X. In the second embodiment, a process for user A becoming an acquaintance with user D in web service X is explained.

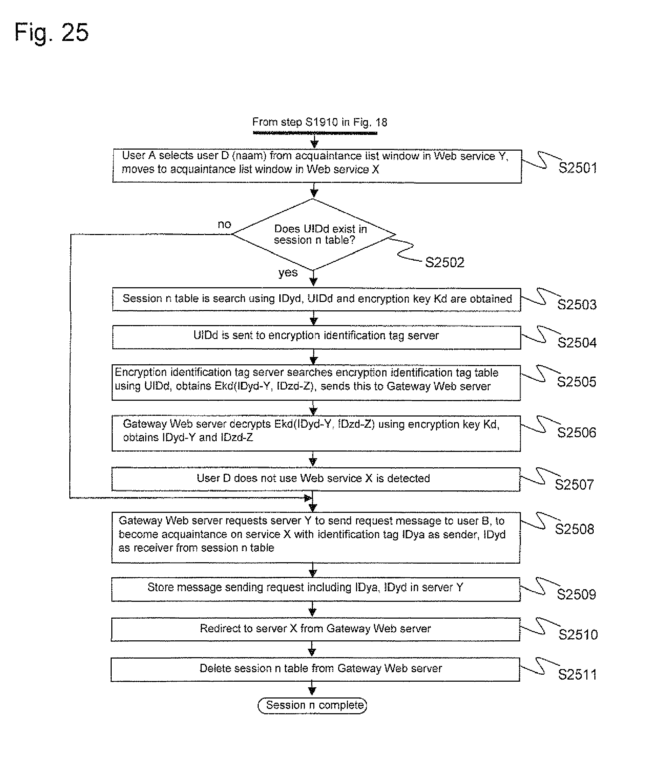

In the second embodiment, the process is explained starting from step S1910 described above with reference to the flowchart shown in Fig. 25. The second embodiment is a part of session n described above and starts from the point where the processes from step S1201 to step S1909 are already performed. At the point where step S1909 is completed, the image shown in Fig. 21 is displayed on the GUI means 113 of user A's information terminal. At this time, user A continues to use the acquaintance relationship expansion server in web service X (step S1910).

Referring to Fig. 21 again, user A operates the input means 114, moves the cursor 1430 displayed on GUI means 113, aligns the cursor with the Add button 2121, presses the button included in the input means 114, and selecting the Add button 2121, the following two processes are performed. At this time, instead of pressing the Add button 2021, the user aligns the cursor 1430 with the displayed object 2022 shown as naam in web browser 1400, and while selecting by pressing the button included in the input means moves the cursor 1430 within the acquaintance list window 1410 of web service X, releases the selection, and the following two processes are performed even if an operation so called drag and drop is performed. This operation is where user A requests an acquaintance relationship with user D, who until this point existed in an acquaintance relationship only in the web service Y, also in the web service X. At this time, user D is not a user of web service X and does not have an identification tag in web service X. This point is different from embodiment one.

The following two processes are performed using the operation described above. The first process is for a change in display in the GUI display means 113 of user As information terminal. The second process is for requesting acceptance from user D of becoming an acquaintance of user A also in web service X.

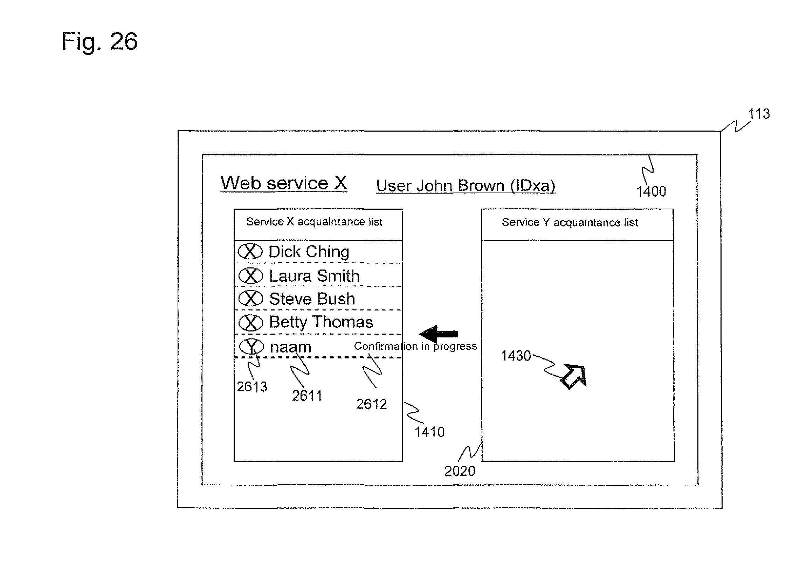

First, the first process is explained. Information that the Add button 2021 has been pressed and that a drag and drop has been performed is sent to the gateway web server 100 via the network 191 by the sending and receiving means 111. When the sending and receiving means 101 receives this information, the HTML generation means 102 generates a new HTML code for displaying a screen as shown in Fig. 26. This new HTML code is sent to the information terminal of user A via the sending and receiving means 101 via the network 191. When the sending and receiving means 111 receives this, the image shown in Fig. 26 is displayed on the web browser 1400 of the GUI display means 113 after an analysis by the HTML analysis means 112.

In the screen shown in Fig. 26, an object 2611 which shows that user D, who has the nickname naam in web service Y, is in an acquaintance relationship in web service Y with user A is newly added to the acquaintance list window 1410 of web service X (step S2501). The characters "confirmation in progress" 2612 is displayed in the object 2611 which represents user D. This does not have to be the characters "confirmation in progress" but can be any display which means a state prior to accepting an acquaintance relationship of user D with user A also in the web service X. Furthermore, in the example shown in Fig. 26, the object 2611 which represents user D is added to the acquaintance list window 1410 in the service X as a result of the operation in step S2501. However, for example, the object may be added to a separate window such as " a person you are attempting to add to acquaintances in service X" displayed in web browser 1400. In addition, in the example shown in Fig. 26, as a result of the operation in step S2501, the object 2122 which represents user D shown in Fig. 21 is deleted from the acquaintance list window 2020 of web service Y in Fig. 26. However, the object does not have to be deleted.

Next, the second process is explained. Information that the Add button has been pressed and that a drag and drop has been performed in step S2501 is sent to the gateway web server 100 via the network 191 by the sending and receiving means 111. When sending and receiving means 101 of the gateway web server receives this information, the search means 107 searches for the UID and encryption key of user D, by , referring to Fig. 16, who has the identification tag IDyd 1615 selected in step S2501 from the table 1301 of session n in the temporary storage means. If a UID does not exist, the process proceeds to step S2508 described below. In the example shown in Fig. 16, as a result of the search, UIDd1635 and Kd1645 are obtained (step S2503). Next, the sending and receiving means 101 sends a request for an encryption identification tag group associated with the UIDd to the encryption identification tag server 170 via the network 192 (step S2504).

In the encryption identification tag server 170, the sending and receiving means 501 receives this request and search means 504 searches the encryption identification table for the received UIDd as a search key. By referring to Fig. 18, the UIDb1831 is detected. Then, the sending and receiving means 501 sends the encryption identification tag group Ekd (IDyd -Y, IDzd -Z) which is associated with UIDd1831 to the gateway web server via the network 192 (step S2505). When the sending and receiving means 101 of the gateway web server receives this, the decryption means 106 decrypts the received Ekd (IDyd - Y, IDzd - Z) using the encryption key Kd obtained in step S2503. As a result, two identification tags IDyd and IDzd held by user B, and the fact that these are identification tags of each web service Y and Z is obtained (step S2506). With this process, it is judged that the user B who holds IDyd in web service Y, is not a user of web service X (step S2507).

In the case of embodiment two, because user D is not a user of web service X, a message requesting an acquaintance relationship with user A in web service X cannot be sent to user D via web service X. As a result, this message is sent to user D via web service Y Next, referring to Fig. 16, a message sending request for IDya 1602 as the sender's identification tag, and IDyb 1615 as the receiver's identification tag in the table of session n is sent to the web service Y via the network 192 (step S2508). Here, the message which is requested is for user A to request an acquaintance relationship in the web service X with user D. Next, the sending and receiving means 161 of web service Y receives the message sending request and stores it in the storage means 167 (step S2509).

In the example shown here, user A terminates the acquaintance relationship expansion service at this point. As a result, the access from the web browser of user A is redirected to the server 150 of web service X (step S251 0), the table 1301 of session n which is in the temporary storage means of the gateway web server is deleted (step S2511) and session n is terminated.

Following this, user B logs in to web service Y (step S2701). Next, the message generation means 166 of the server of web service Y generates a message for requesting an acquaintance relationship in web service X with user A as the sender and user D as the receiver. As the sender and receiver generated at this time, identification tags IDya and IDya, which are stored in step 2509, are used. The message generated here is converted to an HTML code by the HTML generation means 165. The sending and receiving means 161 sends this HTML code to the information terminal 130 of user D via the networks 192 and 191 (step S2702).

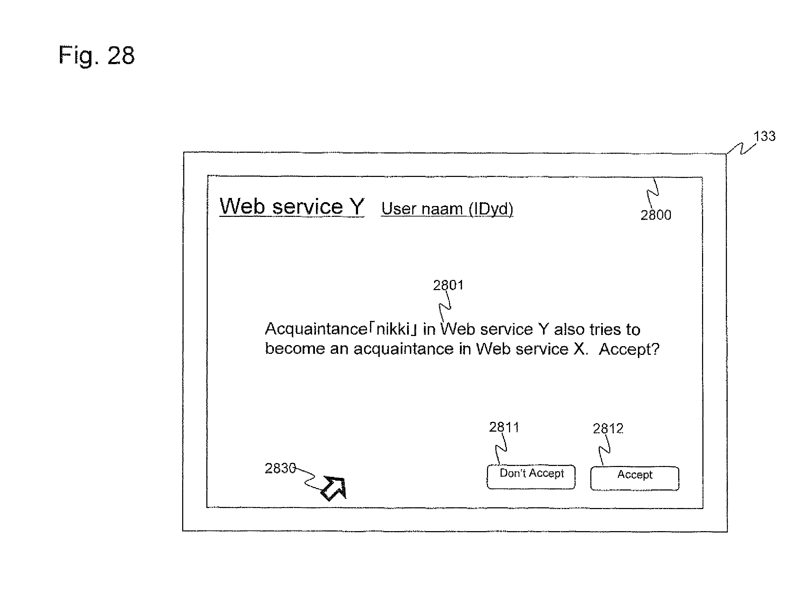

Next, when the sending and receiving means 131 in the information terminal of user D receives the HTML code, the image shown in Fig. 28 is displayed on the GUI display means 133 after an analysis by the HTML analysis means 132. A web browser window 2800 is displayed in the GUI display means 133 (step S2703). A text 2801 which expresses the intention that user A, who is in an acquaintance relationship with user D in web service Y, wishes to be an acquaintance also in web service X, is displayed within the web browser window 2800 (step S2703). In addition, an acceptance button 2811 and a refusal button 2812 are displayed on this screen. A URL (Uniform Resource Locator) of web service X and user A's identification tag IDxa in the web service X are associated with the acceptance button 2812 in the HTML code generated by the HTML generation means 165 of the server of web service Y in step S2702. Here, user D moves the cursor 2830 displayed on the display means 133 using the input means 134, aligns the cursor with the acceptance button 2812 and selects it by pressing the input means button. Next, based on the URL, the web browser 2800 of user D's information terminal is redirected to the server 150 of web service X and IDxa which is associated with the acceptance button 2812 is accepted by the server 150 of web service X (step S2704).

At this time, if user D is a user of web service X, the server 150 of web service X generates an HTML code which generates a screen for creating a new account for user D, and sends the code to the information terminal of user D (step S2705). In the case where user D is a new user of web service X, a new row is added to both the identification tag table 601 of the identification tag database 152 of the server in web service X, and the social graph table 602. When user D logs in to web service X, at this point, user D's identification tag IDxd is added for the identification tag database 152 of the server in web service X, and the social graph table 602 to the column of an identification tag of a person in an acquaintance relationship in service X in the row for identification tag IDxa711 of server X. In addition, user A's identification tag IDxa is added to the column of an identification tag of a person in an acquaintance relationship in service X at the row of IDxd of the social graph table 602. With these processes, user A and user D become new acquaintances with each other in web service X (step S2707).

Furthermore, web service Y may be an electronic mail service in both embodiment one described above and embodiment two. In this case, the identification tags of each user in web service Y become the electronic mail addresses of each user. In addition, the server of web service Y is a mail server and a HTML code is not sent to the information terminals of each user from the server but a code which is based on POP (Post Office Protocol) or IMAP (Internet Message Access Protocol).

Next, the operational effects of the present invention are explained. A method, a system, a server device and an information terminals of the present invention have the following merits.

First, the merits for a web service user are explained. A user of a web service can extend their acquaintance relationships over various web services. For example, suppose web service X is a chat service and web service Y is an SNS service. For example, suppose user A has a potential request to chat with user B who is an acquaintance in an SNS service. In a conventional system where each web service is completely independent, this potential request is inevitably apparent to everyone. However, a method, a system, a server device and an information terminal of the present invention, for example, using the user interface shown in Fig. 20, it is possible to increase the possibility of an expansion of user A's acquaintance relationships in the web service X by making the above request more apparent. In this way, the present invention can provide large merits to users by expanding acquaintance relationships between users between a plurality of web services having different characteristics.

Next, the merits for a provider of web services are explained. It is possible to divide the merits of the present invention for a web service provider into two categories. The first merit for a web service provider lies in encouragement of a web service by an existing user. This merit is largely related to embodiment one. For example, acquaintances of a user in web service X increase using a method, a system, a server device and an information terminals of the present invention compared to web service X in a conventional system. If acquaintances increase in the web service X, the possibility that user A will use web service X more frequently is higher. Generally, the profit of a web service provider tends to increase with an increase in frequency of use by a user. Therefore, it is possible to increase a web service provider's profit by using a method, a system, a server device and an information terminals of the present invention.

The second merit for a web service provider is that it is possible to increase the number of new users. This merit is largely related to embodiment two. In embodiment one, user D was not a user of web service X. However, when user D receives an invitation message to join web service X as is shown in Fig. 28, the possibility that user D will become a user of web service X increases. Generally, the profit of a web service provider tends to increase with an increase in frequency of use by a user. Therefore, it is possible to increase a web service provider's profit by using a method, a system, a server device and an information terminals of the present invention.

In the case where a conventional system is used, if information in the identification tag table 601 and the social graph table 602 of web service X and the identification tag table 901 and the social graph table 902 of web service Y is exchanged between servers, it is possible to realize the merits for users and web service providers. In addition, it could be possible for the provider of web server X to realize the above described merits and merits of a user by gathering information of each table in a third server managed by a third party who is not the provider of web service Y. However, the information related to users or information of acquaintance relationships between users stored in each table is often the source of value for web service providers and therefore passing this information to other web service providers or third parties is often not permitted.

In a method, a system, a server device and an information terminals of the present invention, it is possible to send information about users of each web service provider or information about the acquaintance relationships between users to another web service provider or third party without the information being stored and realize merits for both users and the web service providers. This is explained in detail below.

It is already explained that embodiment one and embodiment two realize merits for both users and web service providers. In order to realize these merits, the information related to users stored in a server X of web service X is the identification table 601 shown in Fig. 7 and the social graph table 602 shown in Fig. 8. In addition, the information related to users stored by a server of web service Y is the identification table 901 shown in Fig. 10 and the social graph table 902 shown in Fig. 11. As is clear from the Figures, information of users or acquaintance relationships in web server Y are not stored in the server of web service X. In addition, reversely, information of users or acquaintance relationships in web server X is not stored in the server of web service Y.

In a method, a system, a server device and an information terminal of the present invention, it is the encryption identification tag server 170 which stores associations of identification tags in a plurality of web services. For example, suppose the encryption identification tag server 170 is neither managed by a provider of the web service X nor a provider of the web service Y but is managed by a third provider. Referring to Fig. 18, it is the identification tag group 1820 in the various web services encrypted and associated with a UID which is stored in the encryption identification tag server. Here, referring to Fig. 5, a key for decrypting the encrypted identification tag group does not exist in the encryption identification tag server and a key required for decryption exists in the server of the web service X or the web service Y The third provider has no means for obtaining users data or acquaintance relationships which include identification tags of web service X or web service Y

Identification tags or acquaintance relationships of a user of each service shown in Fig. 16 are unzipped in the temporary storage means in the gateway web server 100. However, this information is not stored in a non-volatile storage means and is deleted when a session is terminated. The gateway web server 100 functions as a neutral independent sever from the server of each web service or encryption identification server. The operator of the gateway web server also does not need to hold a database stored with the identification tags, attached information or acquaintance relationships of a user of the web service X or web service Y.

As described above, despite it being possible to mutually use acquaintance relationships in a plurality of web services using the present invention, it is not necessary to provide identification tags, attached information and acquaintance relationships of users stored in the servers of each web service to the server of another service.

### Explanation of the Reference Symbols

100 Gateway web Server
110 Information terminal of user A
120 Information terminal of user B
130 Information terminal of user D
150 Server of web service X
160 Server of web service Y
170 Encryption identification tag server
191 Network
192 Network

## Claims

1. A service system comprising:
a plurality of service servers;
a management server device; and
a gateway server device capable of communicating with the plurality of service servers and the management server device;
wherein
each of the plurality of service servers is capable of associating and storing an identification tag which identifies a user within the service server with an identification tag of another user of the service server, and is further capable of associating and storing the identification tag with identification information that uniquely identify the user within the plurality of service servers and an encryption key generated for the identification information;
the management server device stores a table that stores the identification information in a first column and encrypted information in a second column, the encrypted information being obtained by encrypting one or plurality of identifiers of service servers that the user identified by the identification information stored in the first column can use with the encryption key associated and stored with the identification information in one of the plurality of service server;
the gateway server device including;
a first reception part which receives a first other-user identification tag which is associated with a first identification tag and which is stored in a first service server which is one of the plurality of service servers, from the first service server;
a first storage part which associates and stores the first other-user identification tag received by the first reception part with an identifier of the first service server, in a temporary table;
a second reception part which receives a second other-user identification tag which is associated and stored with a second identification tag which identifies a user identified by the first identification tag within a second service server, from the second service server which is one of the plurality of service servers;
a second storage part which stores the second other-user identification tag received by the second reception part with an identifier of the second service server, in the temporary table;
an identification information sending part which sends the first identification information to the management server device if it is judged that the first other-user identification tag is associated and stored with the first identification tag and a first encryption key in the first service server;
an encrypted data receiving part which receives from the management server device encrypted information which is obtained by encrypting information including an identifier of the first service server by the first encryption key, the encrypted information being received according to sending the first identification information by the identification data sending part;
a first instruction part which instructs the first service server to send a first message to a user identified by the first other-user identification tag, if an identifier of the second service server is not included in a result of decrypting the received informaton data by the first encryption key.

2. A management server device capable of communicating a plurality of service server, each of the plurality of service servers being capable of associating and storing an identification tag of a user which identifies uniquely the user within the service server with identification information that uniquely identify the user within the plurality of service servers and an encryption key generated for the identification information, comprising;
a storage device which stores a table that stores the identification information in a first column and encrypted information in a second column, the encrypted information being obtained by encrypting one or plurality of identifiers of service servers that the user identified by the identification information stored in the first column can use with the encryption key associated and stored with the identification information in one of the plurality of service server.

3. The management server device according to claim 2, wherein the encryption key is not stored.

4. The management server device according to claim 2, wherein the encrypted information stored in the second column is information obtained by encrypting the identifiers of the service servers and identification tags which identifies the user, each of the identification tag identifying the user within one of the service servers.

5. The management server device according to claim 2, further comprising:
an identification data reception part which receives identification information; and
a search part which searches a location where identification information which matches the received identification information is stored in the first column.

6. The management server device according to claim 5, further comprising:
an encrypted information sending part which reads out and sends encrypted information which is stored in a location in the second column which corresponds to the location in the first column.

7. The management server device according to claim 5, further comprising:
a reception part which receives identification information and encrypted information; and
a updating part which updates encrypted information stored at a location in the second column corresponding to the location in the first column, to the received encrypted informatoin.

8. The management server device according to claim 2, wherein any one of the plurality of service servers can associate and store one identification tag with other identification tags.

9. The management server device according to claim 2, further comprising:
an identification data generation instruction receiving part which receives an instruction for generating identification information;
an identification information generation part which generates identification information according to the instruction;
an identification information return part which returns the generated identification information; and
an insertion part which inserts encrypted data received according to receiving the returned identification information, and the generated identification information to the same location within the first column and the second column respectively.

10. A gateway server device comprising:
a first reception part which receives a first other-user identification tag by communicating with a first service server, the first service server being one of a plurality of service servers, each of the plurality of service servers being capable of associating and storing an identification tag which identifies a user within the service server with an identification tag of an other user of the service server, and being further capable of associating and storing the identification tag with identification information that uniquely identify the user within the plurality of service servers and an encryption key generated for the identification information;
a first storage part which associates and stores a first other user's identification tag received by the first reception part with an identifier of the first service server, in a temporary table;
a second reception part which receives a second other user's identification tag which is associated and stored with a second identification tag which identifies a user identified by the first identification tag within a second service server, from the second service server which is one of the plurality of service servers;
a second storage part which stores the second other user's identification tag received by the second reception part with an identifier of the second service server, in the temporary table;
an identification information sending part which sends the first identification information associated and stored with the first other user's identification tag if it is judged that the first other user's identification tag received by the first reception part tag is associated and stored with the first identification tag and the first encryption key in the first service server; and
an encrypted information receiving part which receives an encrypted information obtained by encrypting information including the identifier of the first service server from the first encryption key, according to sending the first identification information by the identification information sending part.

11. The gateway server device according to claim 10, further comprising:
a first instruction part which instructs the first service server to send a first message to a user identified by the first other user's identification tag, if the identifier of the second service server is not included in a result of decrypting the received encrypted information by the first encryption key.

12. The gateway server device according to claim 11, wherein the first message includes data for allowing a user identified by one of the first other user's identification tags to use the second service server.

13. The gateway server device according to claim 10, further comprising:
a second instruction part which instructs the first service server to send a second message to a user identified by the first other user's identification tag, if the identifier of the second service server is included in a result of decrypting the received encrypted information by the first encryption key, and if the identification information associated and stored with the first other user's identification tag by the first service server and the identification information associated and stored with the first other user's identification tag by the second service server are different.

14. The gateway server device according to claim 13, wherein the second message includes data for associating the second other user's identification tag with the second identification tag in the second service server to a user identified by one of the first other user's identification tags.

15. The gateway server device according to claim 11, further comprising:
an screen data sending part which sends screen data for displaying a character or an image which represents a first other user's identification tag stored by the first storage part, in a first area, and a character or an image which represents a second other user's identification tag stored by the second storage part, to a second area so that the character or the image which represents the second other user's identification tag can be dragged to the first area;
a drag detection part which detects whether the character or the image, which represents the second other user's identification tag displayed by the screen data sent by the screen data sending part, is dragged; and
a judgment start part which starts a judgment whether the identifier of the second service server is included in a result of decrypting the sent encrypted information by the decryption key when the detection part detects that the character or the image is dragged.

16. The gateway server device according to claim 15, wherein information for displaying a first button is included in the screen date, the gateway server device further comprising:
a button detection part which detects whether the first button is pressed; and
a deletion part which deletes data stored in the temporary table when the button detected part detects that the first button is pressed.
